# EUROPEAN PATENT SPECIFICATION

(11) **EP 3 289 655 B1**
(45) Date of publication and mention of the grant of the patent: **10.04.2019**
(21) Application number: 15722668.9
(22) Date of filing: 28.04.2015
(51) Int. Cl.: G06Q 20/08, G06Q 20/12, G06Q 20/14, G07F 15/00, G07F 15/04, H02J 3/38, H02J 13/00, G07F 7/00, H02J 3/00

(54) **AUTONOMOUS UTILITIES CONTAINER**
AUTONOMER VERSORGUNGSBEHÄLTER
RÉCIPIENT DE SERVICES AUTONOMES

(43) Date of publication of application: 07.03.2018
(73) Proprietor: RVE.SOL - Soluçoes de Energia Rural Lda., 2416-905 Leiria (PT)
(72) Inventor: VENDEIRINHO, Vivian, 2400-489 Leiria (PT)
(74) Representative: ZBM Patents - Zea, Barlocci & Markvardsen
(86) International application number: PCT/EP2015/059149
(87) International publication number: WO 2016/173622

(56) References cited:
- EP-A1- 2 701 266
- US-A1- 2002 033 020
- US-A1- 2008 140 575
- US-B1- 7 458 510

## Description

The present disclosure relates to containers and more specifically to autonomous containers for providing utility services to remote, off-grid areas.

### BACKGROUND ART

About 1/5 of the world's population still does not have access to electricity where about 85% of which live in rural areas in developing countries. Adding the fact that rural communities are often characterised by being highly disperse with low population and energy needs density, as well as low income, these tend to make grid extension economically unreliable, therefore usually rendering decentralised diesel generators for power supply which are noisy, dirty, and expensive to operate and maintain, making them costly and an unsustainable solution in the long term. On the other hand, renewable energy technologies offer a clean, silent operation, affordable and flexible solutions.

Many developing countries still rely massively on kerosene lamps for lighting purposes since it's a widely available solution, although at a far higher cost to consumers. Furthermore, use of kerosene imposes health risks due to flumes exposure and fire accidents. These lamps are an enormous safety risk. Switching to electricity eliminates these risks, reduces expenditure and increases efficiency.

There are currently about 2.7 billion people in developing countries who rely for cooking primarily on biomass, including wood, charcoal, crop residues and animal dung, used in inefficient traditional devices like pottery or cement stoves, mud or metal stoves or three-stone fires, with no operating chimneys or hoods. Inefficient and unsustainable cooking practices also have serious implications for the environment, such as degradation and local and regional air pollution. On the other hand, modern cooking stoves based on biogas e.g. from manure (or others), are an alternative route to provide clean, cheap and efficient cooking energy which dramatically decreases pollutant exposure and thus premature deaths, deforestation and green-house gas emissions, increases productive-time and possibly, gender equity.

Lack of access to clean water and the resultant consumption of contaminated water cause a staggering 4 billion cases of diarrhea every year. By providing rural communities with adequate apparatus for water purification, safe sanitation and health conditions are drastically improved, cutting the need for medicines and health treatment which makes promoting schools and other basic services possible a lot easier.

Electricity, biogas and clean potable water are largely accepted as key factors leading to economic and social development. An obvious solution is to extend the corresponding utilities grid from urban areas to the remote rural areas. However, the cost of such an extension is prohibitive for many developing countries and particularly for developing countries that are sparsely populated. Furthermore, even if this grid is expanded it might be prohibitive for these populations to be able to maintain binding contracts, such as monthly contracts, with the utilities, as they may only need access to the utilities a few minutes per day.

It is desirable to provide the aforementioned utilities to rural areas while at least partially solving the above-mentioned problems.

In this respect, EP 2 701 266 A1 discloses a regenerative power supply system.

### SUMMARY OF THE INVENTION

Aspects of the invention are disclosed in independent apparatus claim 1.

By providing a local controller in communication with a central control system it is possible to disassociate the dispensing of the utility from its payment. The local controller needs only receive an authorisation to dispense the utility. Whether the request to dispense the utility is a credible request, i.e. is a request covered by adequate funds or credit, is an issue that is resolved by the central control system. Therefore, the container's controller may only be in charge of the dispensing of the utilities, leaving the handling of any user accounts and payment to the central control system. As a result, it may be possible to provide utility services on a pre-payment basis to remote, off-grid areas. Furthermore, it may allow users to perform pre-payment of the utility services via mobile payment, i.e. from or via a mobile device, which may be the only available form of payment in remote rural areas.

In some examples the control module may comprise a communications interface, for example a wireless interface such as a mobile communications interface, configured to remotely connect to the central control system. The communications interface may allow for the establishment of a connection between the container and the remote station even in remote areas.

In some examples the one or more utility modules may comprise at least an electricity module. The electricity module may comprise an electricity production unit and an electricity supply unit. The electricity supply unit may be configured to be coupled to a plurality of demand sites to form a mini-grid. Distribution to each demand site, e.g. a rural house or small business, may be provided by means of a dual wire, single phase or triple wire, three phase mini-grid.

In some examples, the electricity production unit may comprise a renewable energy production unit. The renewable energy production unit may comprise a hybrid photovoltaic plant and/or a biomass plant and/or a hydropower plant and/or a wind power plant. It may be coupled to an appropriately dimensioned battery bank to satisfy night-time energy demand and a diesel generator set for backup & maintenance situations.

In some examples, the one or more utility modules may comprise a potable water production module. The potable water module may comprise a water purification unit and a water-dispensing unit. The water purification unit may be based on an ultra-filtration or desalination process. The water-dispensing unit may be a simple manually operated tap or it may be an automatic dispenser that may also measure quantity and quality of dispensed water.

In some examples the one or more utility modules may comprise a biogas module. The biogas module may comprise a biogas generation unit and a biogas distribution module. The biogas generation unit may comprise a digester for generating digestate and biogas from a fresh organic material. The biogas distribution module may comprise reusable bags, e.g. resin-impregnated industrial linen bags, for storing and transporting the biogas.

In some examples the autonomous utilities providing container may further comprise a utility request module, configured to receive client utility requests. The utility request module may be a manual operator control panel or an automatic panel receiving requests e.g. wirelessly or through a payment module.

In some examples the control module may be configured to transmit the utility request to the central control system, receive an authorisation to dispense the requested utility and instruct the one or more utility supplying modules to dispense the requested utility. For example, the control module may forward the request to the central control system to verify that the customer that made the request has credit to purchase the requested utility. The central control system may then verify the credit status of the customer and transmit an authorisation (or not) to the control module to dispense the requested utility.

Moreover, a multi-hub system is disclosed. The multi-hub system may comprise one or more autonomous utilities providing containers according to examples disclosed herein, and a central control system, connected to said one or more autonomous utilities providing containers. The autonomous utilities providing containers may be connected directly to the central control system. In other implementations, one container may act as a hub for other containers. The services may be provided to individual communities on a mini-grid basis or the container units may be integrated into larger grids formed of interconnected mini-grids. The mini-grids may then contribute to provide services to the larger grid as a whole but function autonomously in their own right.

In some examples, the central control system may comprise a communications interface to receive requests from the autonomous utilities providing containers and transmit responses to said requests. The communications interface may be a wireless interface, such as a mobile communications interface (e.g. GPRS).

In some examples the central control system may comprise a payment interface. The payment interface may be configured to receive credit information from a financial entity and provide authorisations to the one or more autonomous utility providing containers to dispense a requested quantity of a utility. In some implementations, the payment interface may be a mobile money interface and the financial entity may be a mobile money service provider. The payment module may provide authorisations and allow for micro-payments to be made via mobile phones. This may be particularly beneficial in remote rural areas where utilities may only be necessary on an occasional, temporal manner and where the customers may not be financially able to sustain monthly contracts.

Additional objects, advantages and features of embodiments of the invention will become apparent to those skilled in the art upon examination of the description, or may be learned by practice of the invention.

### BRIEF DESCRIPTION OF THE DRAWINGS

Particular embodiments of the present invention will be described in the following by way of non-limiting examples, with reference to the appended drawings, in which:
Fig. 1a is an external view of an autonomous utilities providing container according to an example;
Fig. 1b is a schematic view of the interior of an autonomous utilities-providing container according to an example;
Fig. 1c is a schematic view of an autonomous utilities' providing container connected to a rural home according to an example;
Fig. 2 is a high level diagram of a mini grid employing a plurality of autonomous utilities providing containers according to an example;
Fig. 3 is a block diagram of an autonomous utilities providing container according to an example;
Fig. 4 is a block diagram of a telemetry system according to an example;
Fig. 5 is a block diagram of a payment, metering and management system according to an example;
Fig. 6 is a flow diagram of a payment method according to an example.

### DETAILED DESCRIPTION OF EMBODIMENTS

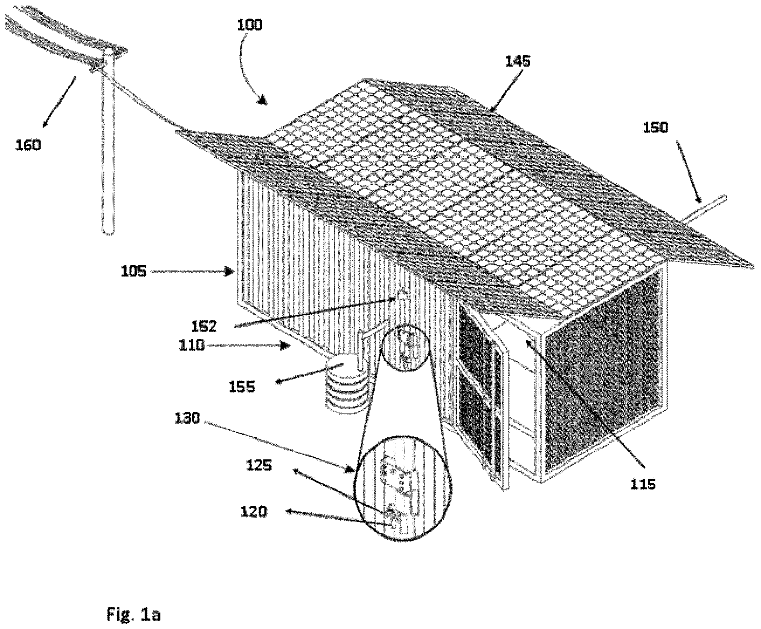

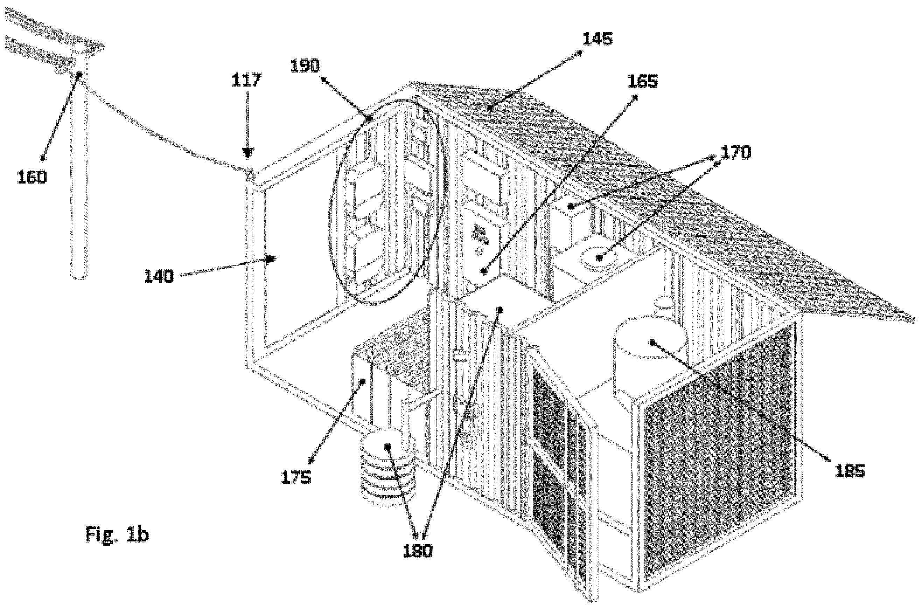

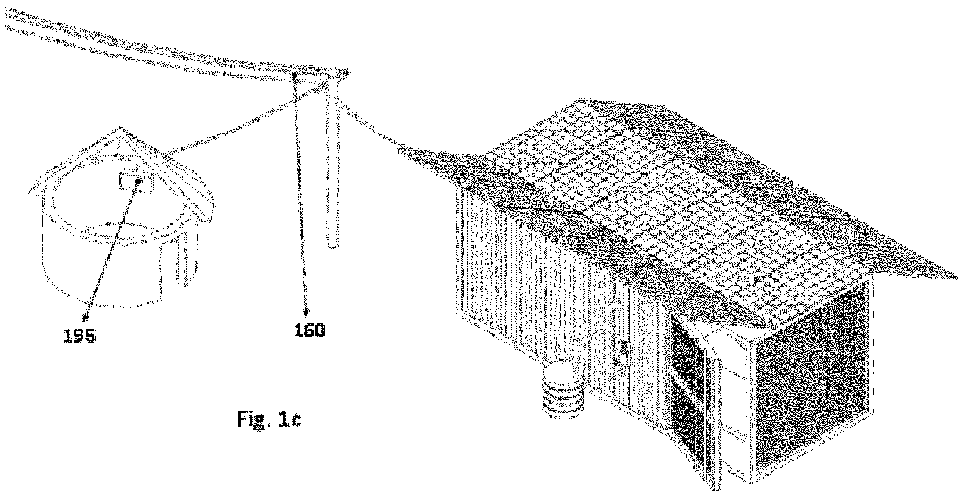

Fig. 1a is an external view of an autonomous utilities providing container according to an example. Fig. 1b is a schematic view of the interior of an autonomous utilities-providing container according to an example. Finally, Fig. 1c is a schematic view of an autonomous utilities' providing container connected to a rural home according to an example. Container 100 may comprise a solid shell 105. The solid shell 105 may be made of any anticorrosive material, such as steel. The solid shell 105 may be resting on a base 110. The base may be a permanent cement base, e.g. a concrete foundation, if the installation is foreseen to last a longer time. For more temporary deployments the base 110 may be a simple anchoring solution, similar to a caravan anchoring. The solid shell 105 may comprise openings 115 or input/outputs. Each opening may be adapted as a door or window allowing access to the interior of the solid shell. Some outputs may be adapted to provide a utility while some inputs may be adapted to receive raw material, requests, instructions or payment. For example, a first output 117 may provide electrical connections to supply electricity; a second output 120 may provide a tap for delivering potable water, a third opening 125 may provide a gas supply to deliver biogas. An input 130 may host a control panel, for controlling the provision of the utilities. Yet another input (not shown) may provide a payment module for making payments corresponding to requested utilities. The solid shell 105 may also comprise a main door 140 for accessing the interior of the container. On top of the solid shell 105, the container 100 may comprise a solar plant 145. The solar plant 145 may comprise photovoltaic panels that may generate electricity to be stored, e.g. in a battery bank 175 hosted in the interior of the container. The solar plant may comprise a foldable structure that may only generate electricity when unfolded. For example, the solar plant may comprise a triptych having a main panel substantially coinciding with the top of the container, and two wing panels hinged to the main part. When not in use, the triptych may be folded so that the two wing panels fold over the central one. This may be beneficial during bad weather or during transportation of the container. The container 100 may also include a raw water input 150 for receiving raw water from a potentially unclean source. A water purification plant 170 may purify and/or desalinise the raw water to generate potable water. The container 100 may also include an animal and bio waste input 152 for receiving source material to be used in the biogas generation plant 180 and in the biomass power generation plant 185. An organic fertilizer deposit 155 may serve as a deposit of by-products of the biogas generation plant 180. The container may also comprise a biomass power generation plant 185 that may co-produce electricity with the solar power plant 145. The electricity may be provided to the battery bank 175 and thereafter through the inverter and charger unit 190 to local electricity consumers via a local electricity grid 160. The consumers may be local houses or businesses connected to the grid with a consumption and metering unit 195.

In one implementation the solution may include two parts: a rural energy and water unit (the "container"), remotely installed to provide entire communities with potable water and renewable energy (electricity and biogas) for lighting and cooking, and a central control system, such as a backend server that may be a cloud-based software solution that may communicate bi-directionally with the remote containers via GPRS/GSM, log data from the remote containers in real-time and execute pre-defined actions based on incoming data. A container control unit 405 at the container may comprise communication equipment to communicate remotely with the backend server.

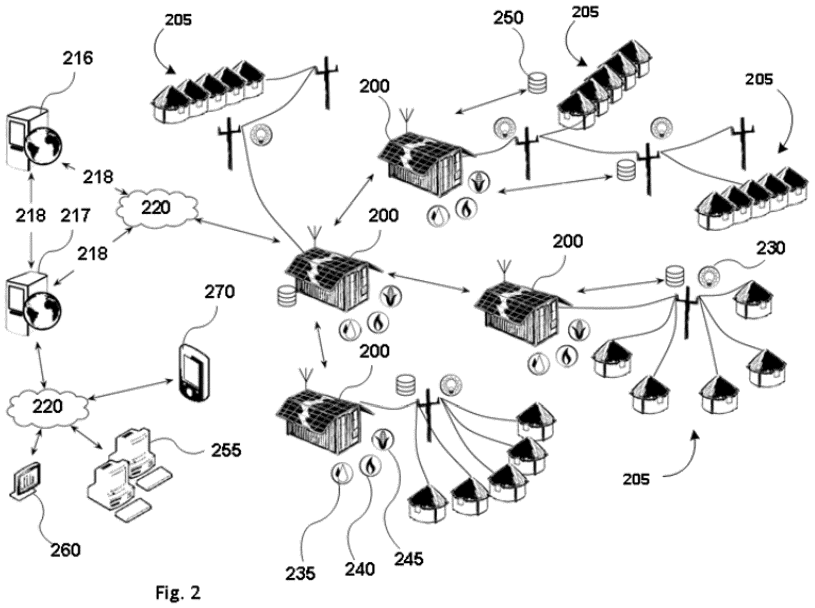

Fig. 2 is a high level diagram of a mini grid employing a plurality of autonomous utilities providing containers according to an example. The mini grid 200 may comprise a plurality of containers 205. Each container may be coupled to a number of demand units 210, e.g. houses. Each container may provide electricity 230, potable water 235, biogas 240 and fertiliser 245 to the subscribing demand units. The containers 205 may communicate wirelessly, e.g. by mobile communications 218 and/or by a cloud connection 220, with a central control system 215. The central control system 215 may comprise a primary database server 216 and a secondary server 217, for backup and redundancy purposes. The servers may be remotely accessible with a secure remote access to administrators of the system, via web connected computers 255 or mobile devices 270. The containers may also be connected between them either physically, to share excess capacity, or wirelessly to exchange information.

The containers have been designed not only initially to provide these services to individual communities on a mini-grid basis but then later to integrate the units into a larger grid formed of interconnected mini-grids. The mini-grids may contribute to provide services to a larger grid as a whole but function autonomously in their own right.

The individual community networks may be managed autonomously, providing real-time data to a central control system (e.g. a cloud-based server) that may collate all data and then generate information, alerts and warnings based on data received at a reporting station 260.

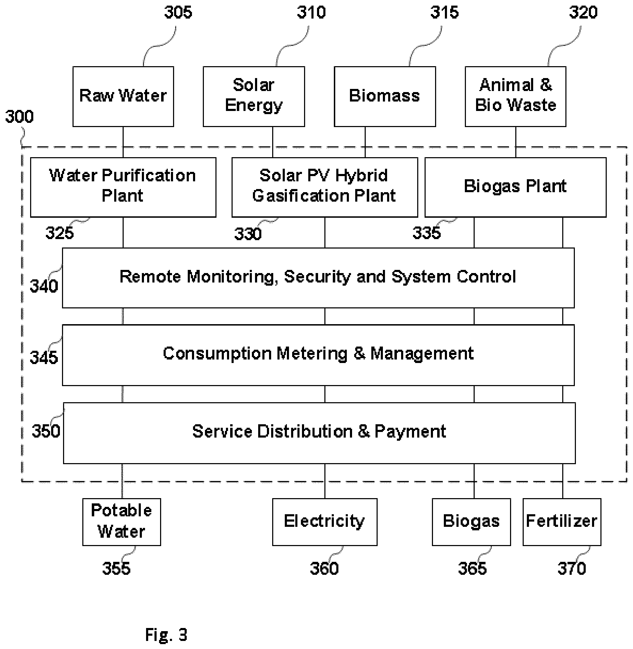

Fig. 3 is a block diagram of an autonomous utilities providing container according to an example. The container comprises a number of integrated sub-systems. The system inputs may include a raw water input 305, a renewable (solar and/or wind) energy input 310, biomass input 315 and animal & bio waste input 320. Raw water input 305 may provide the container with raw water that may be unsuitable to drink. The raw water input 305 may be coupled to a water purification plant 325. The raw water input 305 may be in the form of a tube or a tank that may deliver the raw water to the water purification plant 325. The water purification plant 325 may generate potable water at an output. The system may include five core components, namely an external water pump, a buffer tank & UV pre-treatment, a DC pump, an ultrafilter and an operator control panel. Water may be pumped from an external fresh water source by a pump dimensioned to match the source and provide sufficient raw water for the required daily water needs. An internal buffer tank may be combined with a floating UV-treatment lamp ensuring that any living organisms are rendered inert. This tank may be kept automatically at a certain level, e.g. above 75%, to ensure water is always on hand when needed. When a "water dispense" button is pressed at the operator panel or when a water dispense instruction is sent to the system, the system may perform a brief preflush and then proceed to dispense a predetermined quantity, e.g. 10, 20 or 40L as requested by the operator, within a few seconds. The filter permeability may be continuously monitored to ensure that, when needed, a cleaning cycle (backwash/flush) may be automatically performed. A cyclic membrane integrity testing may be performed every few days at night to ensure that the membrane structure is not compromised. Filtration may be inhibited if membrane integrity is compromised; therefore the testing may guarantee the quality of water. Any monitoring functions may be automatically carried out without local operator intervention to assure maximum system uptime and reliability.

The renewable energy input 310 may comprise solar panels that may provide the container with solar energy and/or wind turbines that may provide the container with wind energy. The biomass input 315 may be in the form of a tank or a pre-treatment passageway that may provide pre-treated biomass to the container. The solar energy input 310 and the biomass input 315 may be coupled to a solar PV hybrid gasification plant 330 that may generate electricity at an output. AC power generated by the biomass system may be fed into a battery bank inverter, which may control the allocation of power directly to the consumers during scenarios of low solar irradiation and/or during high power demand periods, e.g. at evening time, allocating the surplus power being produced to charge the battery bank as needed.

Finally, the animal & bio waste Input 320 may provide raw material for the biogas plant 335 that may generate biogas at an output. A monitoring module 340 may provide technical management & remote diagnosis of the complete system. More specifically it may provide monitoring, security and system control to the various plants of the system. A further metering module 345 may be in charge of the consumption metering and management. A payment module 350 may provide the service distribution and payment to the customers of the system. As shown in Fig. 3, the system may provide four distinct output utilities. At output 355, potable water may be provided from the water purification plant 325. At output 360, electricity may be provided from the solar PV hybrid gasification plant 330. At output 365, biogas may be provided from biogas plant 335. Finally, at output 370, fertiliser may be provided as a by-product of the biogas plant 335.

As inputs, locally available resources including raw water, solar and/or wind energy, biomass and/or animal manure may be converted to value-added services of potable water, electricity, biogas and organic fertiliser. These may be stored at the installation site within the community and distributed to meet consumer demand on a "pre-pay-for-service" basis.

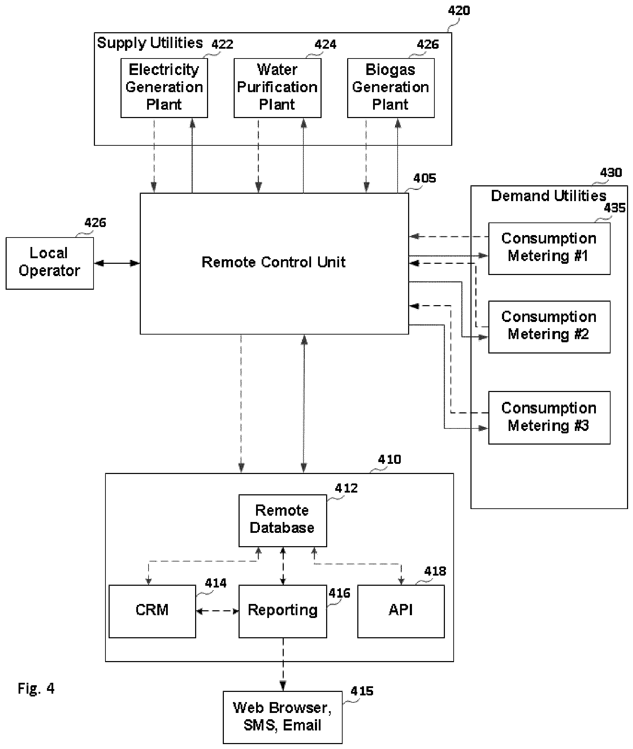

Fig. 4 is a block diagram of a telemetry system according to an example. A remote control unit 405 may be connected to a central control system 410 (e.g. a backend, cloud-hosted server), to supply utilities unit 420, to demand utilities unit 430 and to a local operator 440. The backend server 410 may comprise a database 412, a customer resource management (CRM) module 414, a reporting module 416 and an application-programming interface (API) 418. The backend server may be further coupled to an administrator front end 415 that may access the various modules of the backend server via a web browser, SMS, email or other type of client. The remote control unit 400 may be wirelessly connected to the backend server, e.g. with a mobile communications connection such as a GPRS/GSM connection. The supply utilities unit 420 may comprise an electricity generation system 422, a water purification system 424 and a biogas generation system 426. They may be connected, controlled and exchange information with the remote control unit 400. Accordingly, the demand utilities unit 430 may comprise a plurality of consumption metering units 435. Each metering unit may be responsible for metering the consumption of one or more customers of the supplied utilities. Finally, the local operator 440 may be a local access or control panel for locally monitoring and controlling the remote control unit 400.

The remote control unit (405) may control all system functions remotely and provide system autonomy. Locally three main functions may exist namely, interaction with local operator (440) and control and monitoring of utility generation systems (420) and demand side utility meters (430).

Each remote side sub-system (440, 420, 430) may comprise units with specific functions. The operator panel 440 may be a simple user interface with buttons and indicator lamps that may allow the local operator to execute specific maintenance tasks like dispensing water or biogas, daily biogas system feedstock loading or resetting errors.

The electricity power plant 422 may generate electricity from various locally available renewable resources - these may include solar power, biomass, hydro and wind. It may comprise an energy storage component for dispatching power to the distribution grid when required.

The water purification plant 424 may treat raw water through process of ultra violet, ultra purification and reverse osmosis to generate potable water for consumer consumption. Water may be made available for collection with e.g. a prepaid fee at the remote unit (container).

The biogas generation plant 426 may generate methane-based biogas from organic waste material such as food waste, human or livestock waste. Biogas may be made available for collection with e.g. a prepaid fee at the remote unit (container). It may comprise a unique packaging component in which biogas may be pumped into impregnated linen bags for easy transport to point of consumption. When empty, the bags may be returned for filling by the operator.

The consumers 430 (small businesses and homes) may be connected to the distribution grid via installation of electric panels (435) on their premises. This panel may provide electric protection and control load demand, limiting and metering consumption based on the subscribed tariff. The electric panels 435 may communicate with 405 via power line modem (the power lines) or wirelessly using a protocol such as ZigBee IEEE802.15 to provide remote tariff update capability and reporting of energy consumption.

Relevant remote data from these three local sub-systems may be transmitted to the central control system 410 (e.g. backend server in the cloud) via a GSM network. The backend server may be a cloud-based software solution that may communicate bi-directionally with remote units via GPRS/GSM, log data from the remote units in real-time and execute pre-defined actions based on incoming data. It may record data from the remote units (containers) in central database servers. Asynchronously and at regular intervals the central database may receive information from the remote units covering three levels of information types: information, i.e. general data that may cover day-to-day operation of the remote unit; warnings, i.e. situations that may potentially escalate to cause an error if not corrected; errors, i.e. situations that may cause the system or sub-systems to cease normal function

The central control system 410 may be scaled to provide the backend services covered in the following paragraphs for a practically unlimited number of remote systems. The core services provided by the central control system may include the following:
i. Bi-directional Communication via internet with the remote control unit 405 in order to update relevant parameters e.g. tariff info for a specific consumer or multiple consumers.
ii. Persistent storage of data from multiple remote units at the remote database (412). The remote database 412 may be a cloud-based database incorporating data redundancy and backup that may hold remote system data for numerous remote units. The database data may be accessible to the other sub-systems of the central control system 410.
iii. Processing and presentation of data from multiple remote units (Customer Relationship Management CRM application 414, Reporting application 416). The CRM application 414 may be a cloud based software application that stores and presents registered consumer data, tariff subscription and consumption data. It may provide visualization of consumer data over time. The reporting application 416 may be a cloud based software application that provides reporting services on remote systems functioning over time in visual format via web, static reports via email or alerts and warnings via short messages SMS.
iv. Interface with third party software solutions (Application Programming Interface API 418). The API 418 may be a cloud based software application that provides a defined communication interface and protocol for integration with third party software solutions. It is primarily intended to provide integration to mobile operator and commercial bank mobile money platforms and to facilitate pre-payment for services by the consumer using mobile telephony.

The reporting system 416 and the user web-interface 415 may provide the system owner, manufacturer and service technician real-time information about remote system function and consumer utility service consumption. This may include various types of data, including information (Web browser & email), alerts (Web browser & email) and warnings (Web browser, email & SMS) in increasing level of severity.

The web browser interface may provide graphic visualization of data over time e.g. power generated and consumed over the last week or month or custom date range. The email reporting may provide a text based summary report of data over time e.g. daily summary reports of system function during the previous days. The SMS reporting service may provide short message warnings of time critical information e.g. water system malfunction or power generation below.

The remote units may have built-in GPRS/GSM modems to communicate with the database servers of the central control system via application servers. This communication may be unencrypted or encrypted with e.g. an SSL encryption schema. Remote units may communicate with the central databases using a domain/sub domain name (via DNS) rather than directly by I/P on a pre-configured port number. Each remote unit may use a preassigned username and password for authentication and authorisation.

When communicating its process variable information to the server, the remote unit may use direct MySQL queries to write/read data or Open Data Protocol (ODP) messages. These messages may be sent to the central database servers via http(s) or ftp(s) protocol over the GPRS/GSM network. The central database servers may authenticate the messages received from the remote unit and act upon it. The remote unit may include the following information:
- Process & system variable information
- Constant unique identifier
- UTC date-time stamp yyyy-mm-dd-hh-mm-ss
- Utility consumption data

If the remote unit is unable to communicate with the central server, it may buffer the information locally till such time as communications are reestablished. The server may generate automatic warnings if communications with an installed unit are not achieved within a time period, e.g. 30 minutes.

The report server may generate automatic daily reports, by remote unit, and consolidate data across various units as required, for example, by district or country. It may also generate weekly and monthly reports. The report may be created automatically each night and sent via email to a predefined mailing list configured in the administration console.

Reporting and analysis of remote unit data may be performed by a front end application developed using e.g. a Ruby on Rails (RoR) framework or using rails view rendering technology for mobile versions.

Users may be able to produce graphs via a browser interface or with a reporting interface, which may allow the extraction of table-data based on search criteria. These criteria may include extraction by unit, by selection of units, by date range, by variable or by selection of variables. The generated reports may be outputted in tabular, graph and CSV format.

Users may also be able to produce graph reports by selecting from a predefined list, or date ranges. These criteria may include extraction of data by remote unit, by date range or by graph type. The graphs may include battery status, power generation, power consumption, biogas process pressures & temperatures, water filtration and consumption and/or temperature.

The graphing application may allow visibility and history data across the database and cover the following system variables: solar insolation rates, both current and over time; solar and biomass power and energy generated to date, down to hourly detail level; electricity consumed to date on the mini-grid and for internal use; battery charge status, state of health condition and charge cycles; water filter status, raw water levels, potable water dispensed; biogas system pressures and temperatures.

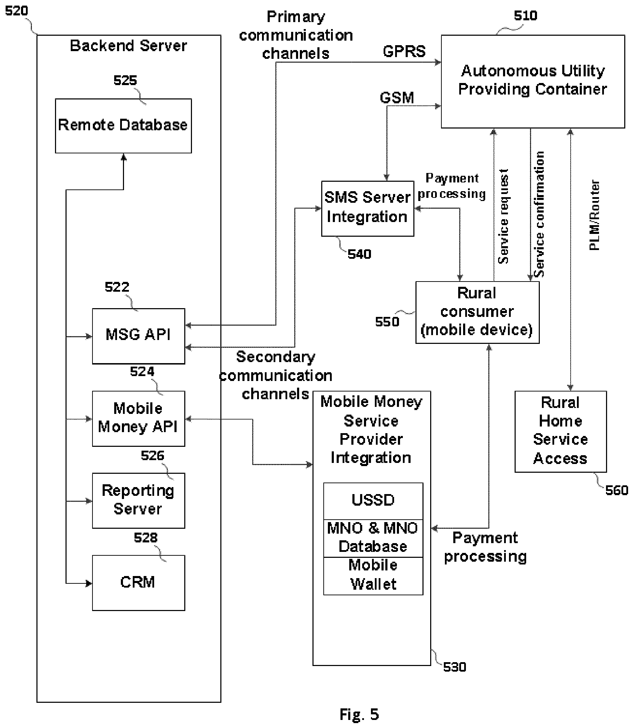

Fig. 5 is a block diagram of a payment, metering and management system according to an example. The payment, metering and management system 500 may comprise the container 510 that may be substantially similar to the autonomous utilities providing container 100 discussed with reference to Fig. 1. The payment, metering and management system 500 may further comprise a backend server 520, a mobile money service provider module 530, am SMS server module 540, a consumer module 550 and a services access unit 560. In a typical scenario, a customer may send a service request to the container 510 with the consumer module 550. The consumer module 550 may be a mobile device such as a mobile telephone. The remote unit may relay the request to the backend server 520 through a primary communication channel that may be a GPRS/GSM channel. Alternatively, the remote unit may relay the request to the backend server 520 through SMS server integration module 540 via a secondary communication channel. A messaging application programming interface (MSG API) 522 at the backend server 520 may receive and process the request. Then mobile money API 524 at the backend server 520 may contact mobile money service provider module 530 to request authorisation for the transaction. The mobile money service provider module 530 may then inform the customer module 550 that a request for a transaction has been made by the mobile money API 524. The customer module 550 may verify that the request is legitimate and then the mobile money service provider module 530 may confirm the transaction or the availability of credit to the mobile money API 524. The MSG API 522 may then instruct the remote unit 510 to confirm the request and dispense the requested utility to the consumer. Then, the rural home service access may begin monitoring and measuring the dispensed utility for the time and quantity requested and/or confirmed.

The container 510, the rural consumer and their mobile telephone 550 & the rural home 560 may be physically located in the community where the system is deployed. The backend server 520, the mobile money service provider module 530 and the SMS server integration module 540 may be software applications that reside in the cloud.

The container 510 may communicate with the in-home or business installed services access units 560 via a power line modem or wireless via Zigbee IEEE802.15. The protocol may support dynamic service enabling, disabling, tariff and hours of operation update, consumption energy metering and load limiting.

Communication with the consumer module 550 may be via short message SMS or USSD. This may support service alerts, pending credit expiry alerts and confirmation of payment and service enablement.

The mobile money service provider module 530 may be a third party software which may be integrated with the backend server 520 via the mobile money API 524 to enable subscription for and payment of utility services provided by the container 510.

The SMS server integration module 540 may be an API level integration with an existing SMS service provider, that may enable both the container 510 and the backend server 520 to send SMS messages as needed to the mobile service provider integration module 530 and to the mobile device 550 of the rural consumer. The functionality of the various modules shall be explained with use case scenarios.

The first use case scenario involves the provision of electricity. Once service access 560 is installed in a consumers home or business the consumer may initiate subscription for a utility service via their mobile phone 550 using SMS to a predetermined number of the container 510. This message may take the following format:
Reg, FIRSTNAME LASTNAME, dd-mm-yyyy, UNITNUMBER
Where dd-mm-yyyy may be the date of birth of the consumer and UNITNUMBER may be the unique identifier for the installed unit in the home or business.

The backend system 520 may receive the request, and after validating that the service access unit 560 with the specific unique identifier is connected to the network and not assigned to another consumer, it may create a consumer record in the CRM 528. A confirmation may be sent to the mobile phone 550 of the consumer requesting confirmation of required tariff and prepayment for such.

Once registered, the consumer may receive an SMS message to select a consumption tariff. An SMS reply may confirm this choice at which time payment may be requested by return. Once the consumer affects payment via mobile money service provider integration module 530, with the payment details provided by the backend server 520, the backend server 520 may transmit authorization for service access to the container 510 which in turn may broadcast a service access authorization message on the grid to service access module 560. This message may determine the daily hours of operation (evening, daytime or 24 hours), power and energy limit and time service access may be enabled (day, week or month). The consumer may now enjoy service provided by the service access unit 560. When service access nears its expiry date or time (e.g. 80%) the backend server 520 may send an SMS message to mobile phone 550 of the consumer indicating that expiry is imminent and requesting from the consumer to initiate payment of the next tranche of service. At this time the consumer may change their tariff if so required. The service access unit 560 at this stage may not need to be advised of same as the original service access authorisation message includes expiry date. The service access unit 560 may automatically terminate service at the required date and time unless instructed otherwise by a new service access authorization message. Once the consumer affects payment via module 530, a new service access authorization message may be sent by the backend server 520 to the container 510 and in turn to service access unit 560 indicating the new terms of service.

In another use case the consumer may initiate subscription for water or biogas utility services via their mobile phone 550 using SMS to a predetermined number of container 510. This message may take the following format:
Reg,FIRSTNAME LASTNAME,dd-mm-yyyy, SERVICE
dd-mm-yyyy may be the date of birth of the consumer, SERVICE may be either WATER or BIOGAS.

The backend system 520 may receive the request, and create a consumer record in the CRM 528. A confirmation may be sent to the mobile phone 550 of the consumer. Once registered, the consumer may purchase a water or biogas service using an SMS message as follows:
a. for water the SMS message may have the following format:
   WATER,FIRSTNAME LASTNAME,QTY
   where QTY may be a number (e.g 10, 20 or 40) indicating corresponding quantity (e.g. 10, 20 or 40L) of potable water
b. for biogas the SMS message may have the following format:
   GAS,FIRSTNAME LASTNAME,QTY
   where QTY maybe a number (e.g. 1) indicating number of bags of biogas equivalent to one day's usage.

Once the consumer affects payment via unit 530, with the payment details provided by the backend server 520 in response to the request indicated in the previous item, the backend server 520 may transmit authorization for service access to container 510 which in turn may broadcast a service access authorization message to the local operator. The consumer may now enjoy service provided by the container 510.

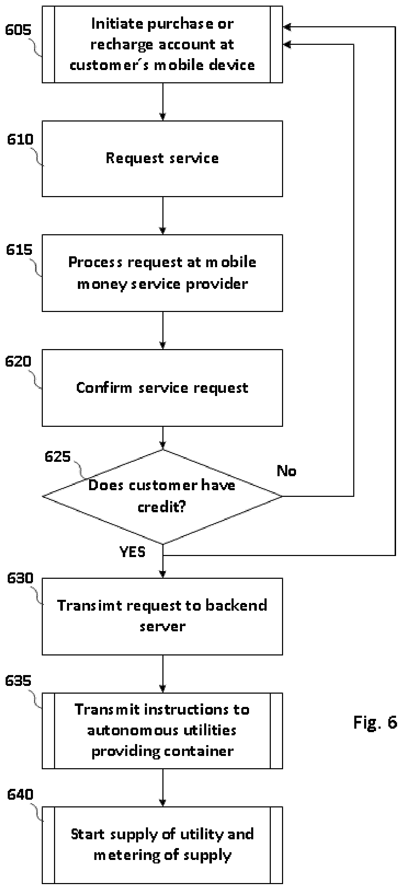

Fig. 6 is a flow diagram of a payment method according to an example. In a first step 605, a customer may initiate a mobile money payment application at a mobile device, such as a mobile phone. The mobile money application may allow for the purchase of a utility or the recharging of an account that may be associated with a utility provided by an autonomous utilities providing container. Then, in step 610, the customer may send a service request, i.e. a request to purchase a utility (e.g. a predetermined quantity or a contract). In step 615, a mobile money service provider may receive the request and process it to determine if the customer has sufficient funds or credit to buy the requested service. In step 620, the mobile money service provider may confirm the service request. It will then check if the customer has credit, in step 625. If the answer is affirmative it may send a confirmation message to be displayed at the mobile device of the customer and at the same time transmit the request confirmation to the backend server of the autonomous utilities providing container. In step 630, the backend server may receive the request confirmation (via e.g. GPRS/GSM) and instruct the corresponding autonomous utilities providing container to deliver the requested utility. In step 635, the autonomous utilities providing container may receive the instruction and release the requested utility. In step 640, a metering device may start metering the consumption of the released utility for invoicing purposes or until all purchased service is consumed.

Although only a number of particular embodiments and examples have been disclosed herein, it will be understood by those skilled in the art that other alternative embodiments and/or uses and obvious modifications and equivalents thereof are possible. Furthermore, the disclosure covers all possible combinations of the particular embodiments described. Thus, the scope of the disclosure should not be limited by particular embodiments.

Further, although the examples described with reference to the drawings comprise computing apparatus/systems and processes performed in computing apparatus/systems, the disclosure also extends to computer programs, particularly computer programs on or in a carrier, adapted for putting the system into practice.

## Claims

1. An autonomous utilities-providing container (100, 510) comprising:
two or more utility supplying modules;
a control module (405), coupled to the utility supplying modules and configured to remotely communicate with a central control system (215);
wherein the utility supplying modules are configured to dispense a quantity of a utility based upon information provided by the central control system,
wherein the two or more utility supplying modules comprise at least
(i) an electricity module comprising an electricity production unit (145, 422) and an electricity supply unit (117), said electricity supply unit configured to be coupled to a plurality of demand sites; and **characterized in** comprising
(ii) a potable water production module, comprising a water purification unit (170, 424) and a water dispensing unit (120).

2. An autonomous utilities-providing container according to claim 1, wherein the control module comprises a communications interface (405) configured to remotely connect to the central control system.

3. An autonomous utilities-providing container according to claim 2, wherein the communications interface is a wireless interface, preferably a mobile communications interface.

4. An autonomous utilities-providing container according to any of claims 1 to 3, wherein the electricity production unit comprises a renewable energy production unit (310).

5. An autonomous utilities-providing container according to claim 4, wherein the renewable energy production unit comprises a photovoltaic plant (145, 310).

6. An autonomous utilities-providing container according to claim 4 or 5, wherein the renewable energy production unit comprises a wind power plant.

7. An autonomous utilities-providing container according to any of claims 4 to 6, wherein the renewable energy production unit comprises a biomass plant (315).

8. An autonomous utilities-providing container according to any of claims 4 to 7, wherein the renewable energy production unit comprises a hydropower plant.

9. An autonomous utilities-providing container according to any of claims 1 to 8, wherein the two or more utility modules comprise a biogas module (335).

10. An autonomous utilities-providing container according to claim 9, wherein the biogas module comprises a biogas generation unit and a biogas distribution module.

11. An autonomous utilities-providing container according to any of claims 1 to 10, further comprising a utility request module, configured to receive client utility requests, transmit the utility request to the central control system, receive an authorisation to dispense the requested utility and instruct the two or more utility supplying modules to dispense the requested utility.

12. A multi-hub system comprising:
one or more autonomous utilities-providing containers (205) according to any of claims 1 to 11; and
a central control system (215), connected to said one or more autonomous utilities-providing containers;

13. The multi-hub system according to claim 12, wherein the central control system comprises a communications interface to receive requests from the autonomous utilities-providing containers and transmit responses to said requests.

14. The multi-hub system according to any of claims 12 to 13, wherein the central control system comprises a payment interface, configured to receive credit information from a financial entity and provide authorisations to the one or more autonomous utilities-providing containers to dispense a requested quantity of a utility.

15. The multi-hub system according to claim 14, wherein the payment interface is a mobile money interface and the financial entity is a mobile money service provider.

## Patentansprüche

1. Ein autonomer betriebsstoffversorgender Behälter (100, 510) umfassend:
zwei oder mehr betriebsstoffversorgende Module;
ein Steuermodul (405), das an den betriebsstoffversorgenden Modulen gekoppelt ist und der konfiguriert ist, um in Fernverbindung mit einem zentralen Steuersystem (215) zu stehen;
wobei die betriebsstoffversorgende Module konfiguriert sind, um eine Betriebsstoffmenge beruhend auf durch das zentrale Steuersystem gelieferter Information abzugeben,
wobei die zwei oder mehr betriebsstoffversorgende Module mindestens folgendes umfassen
(i) ein Strommodul umfassend eine Stromerzeugungseinheit (145, 422) und eine Stromversorgungseinheit (117), wobei die Stromversorgungseinheit konfiguriert ist, um an einer Vielzahl von Nachfragestellen gekoppelt zu werden;
und **dadurch gekennzeichnet, dass** sie folgendes umfassen
(ii) ein Modul zur Erzeugung von Trinkwasser, umfassend eine Wasseraufbereitungseinheit (170, 424) und eine Wasserabgabeeinheit (120).

2. Ein autonomer betriebsstoffversorgender Behälter nach Anspruch 1, wobei das Steuermodul eine Kommunikationsschnittstelle (405) umfasst, die konfiguriert ist, um in Fernverbindung mit dem zentralen Steuersystem zu stehen.

3. Ein autonomer betriebsstoffversorgender Behälter nach Anspruch 2, wobei die Kommunikationsschnittstelle eine drahtlose Schnittstelle, vorzugsweise eine mobile Kommunikationsschnittstelle ist.

4. Ein autonomer betriebsstoffversorgender Behälter nach einem der Ansprüche 1 bis 3, wobei die Stromerzeugungseinheit eine Einheit zur Erzeugung von erneuerbarer Energie (310) umfasst.

5. Ein autonomer betriebsstoffversorgender Behälter nach Anspruch 4, wobei die Einheit zur Erzeugung von erneuerbarer Energie eine Photovoltaikanlage (145, 310) umfasst.

6. Ein autonomer betriebsstoffversorgender Behälter nach Anspruch 4 oder 5, wobei die Einheit zur Erzeugung von erneuerbarer Energie eine Windkraftanlage umfasst.

7. Ein autonomer betriebsstoffversorgender Behälter nach einem der Ansprüche 4 bis 6, wobei die Einheit zur Erzeugung von erneuerbarer Energie eine Biomasseanlage (315) umfasst.

8. Ein autonomer betriebsstoffversorgender Behälter nach einem der Ansprüche 4 bis 7, wobei die Einheit zur Erzeugung von erneuerbarer Energie eine Wasserkraftanlage umfasst.

9. Ein autonomer betriebsstoffversorgender Behälter nach einem der Ansprüche 1 bis 8, wobei die zwei oder mehr Betriebsstoffmodule ein Biogasmodul (335) umfassen.

10. Ein autonomer betriebsstoffversorgender Behälter nach Anspruch 9, wobei das Biogasmodul eine Einheit zur Erzeugung von Biogas und ein Modul zur Biogasversorgung umfasst.

11. Ein autonomer betriebsstoffversorgender Behälter nach einem der Ansprüche 1 bis 10, weiterhin umfassend ein Betriebsstoffsanfragemodul, das konfiguriert ist, um Betriebsstoffsanfragen von Kunden zu empfangen, die Betriebsstoffsanfrage an das zentrale Steuersystem zu übermitteln, eine Autorisierung zur Abgabe des angefragten Betriebsstoffs zu empfangen und die zwei oder mehr betriebsstoffversorgende Module anzuweisen, den angefragten Betriebsstoff abzugeben.

12. Ein Multihubsystem umfassend :
einen oder mehr autonome betriebsstoffversorgende Behälter (205) nach einem der Ansprüche 1 bis 11; und
ein zentrales Steuersystem (215), das mit dem einen oder mehr autonomen betriebsstoffversorgenden Behältern verbunden ist.

13. Das Multihubsystem nach Anspruch 12, wobei das zentrale Steuersystem eine Kommunikationsschnittstelle umfasst, um Anfragen von den autonomen betriebsstoffversorgenden Behältern zu empfangen und Antworte auf die Anfragen zu übermitteln.

14. Das Multihubsystem nach einem der Ansprüche 12 oder 13, wobei das zentrale Steuersystem eine Zahlungsschnittstelle umfasst, die konfiguriert ist, um Kreditauskünfte aus einem Finanzinstitut zu empfangen und Autorisierungen zur Abgabe von einer angefragten Betriebsstoffsmenge an den einen oder mehr autonome betriebsstoffversorgende Behälter zu erteilen.

15. Das Multihubsystem nach Anspruch 14, wobei die Zahlungsschnittstelle eine Schnittstelle von *Mobile Payment* ist und das Finanzinstitut ein Anbieter von Mobile-Payment-Dienstleistungen ist.

## Revendications

1. Un récipient autonome fournissant des matières consommables (100, 510) comprenant :
deux ou plus modules d'approvisionnement en matière consommable ;
un module de contrôle (405), couplé aux modules d'approvisionnement en matière consommable et configuré pour la communication à distance avec un système de contrôle central (215) ;
dans lequel les modules d'approvisionnement en matière consommable sont configurés pour dispenser une quantité d'une matière consommable à partir d'information fournie par le système de contrôle central,
dans lequel les deux ou plus modules d'approvisionnement en matière consommable comprennent au moins
(i) un module d'électricité comprenant une unité de production d'électricité (145, 422) et une unité d'approvisionnement en électricité (117), ladite unité d'approvisionnement en électricité étant configurée pour être couplée à une pluralité de sites de demande ;
et **caractérisés en ce qu'**ils comprennent
(ii) un module de production d'eau potable, comprenant une unité de purification d'eau (170, 424) et une unité de distribution d'eau (120).

2. Un récipient autonome fournissant des matières consommables selon la revendication 1, dans lequel le module de contrôle comprend une interface de communications (405) configurée pour la connexion à distance avec le système de contrôle central.

3. Un récipient autonome fournissant des matières consommables selon la revendication 2, dans lequel l'interface de communications est une interface sans fils, de préférence une interface de communications mobile.

4. Un récipient autonome fournissant des matières consommables selon l'une quelconque des revendications 1 à 3, dans lequel l'unité de production d'électricité comprend une unité de production d'énergie renouvelable (310).

5. Un récipient autonome fournissant des matières consommables selon la revendication 4, dans lequel l'unité de production d'énergie renouvelable comprend une installation photovoltaïque (145, 310).

6. Un récipient autonome fournissant des matières consommables selon la revendication 4 ou 5, dans lequel l'unité de production d'énergie renouvelable comprend une centrale éolienne.

7. Un récipient autonome fournissant des matières consommables selon l'une quelconque des revendications 4 à 6, dans lequel l'unité de production d'énergie renouvelable comprend une centrale à biomasse (315).

8. Un récipient autonome fournissant des matières consommables selon l'une quelconque des revendications 4 à 7, dans lequel l'unité de production d'énergie renouvelable comprend une centrale hydroélectrique.

9. Un récipient autonome fournissant des matières consommables selon l'une quelconque des revendications 1 à 8, dans lequel les deux ou plus modules de matières consommables comprennent un module de biogaz (335).

10. Un récipient autonome fournissant des matières consommables selon la revendication 9, dans lequel le module de biogaz comprend une unité de génération de biogaz et un module de distribution de biogaz.

11. Un récipient autonome fournissant des matières consommables selon l'une quelconque des revendications 1 á 10, comprenant en outre un module de demande de matière consommable, configuré pour recevoir des demandes de matière consommable de clientes, transmettre le demande de matière consommable au système de contrôle central, recevoir une autorisation pour dispenser la matière consommable demandée et donner des instructions pour dispenser la matière consommable demandée aux deux ou plus modules d'approvisionnement en matière consommable.

12. Un système multi-noeud comprenant :
un ou plusieurs récipients autonomes fournissant des matières consommables (205) selon l'une quelconque des revendications 1 à 11 ; et
un système de contrôle central (215), connecté auxdits un ou plusieurs récipients autonomes fournissant des matières consommables.

13. Le système multi-noeud selon la revendication 12, dans lequel le système de contrôle central comprend une interface de communications pour recevoir des demandes des récipients autonomes fournissant des matières consommables et transmettre des réponses auxdites demandes.

14. Le système multi-noeud selon l'une quelconque des revendications 12 à 13, dans lequel le système de contrôle central comprend une interface de paiement, configurée pour recevoir des informations en matière de crédit d'une entité financière et fournir des autorisations à l'un ou aux plusieurs récipients autonomes fournissant des matières consommables pour dispenser une quantité demandée d'une matière consommable.

15. Le système multi-noeud selon la revendication 14, dans lequel l'interface de paiement est une interface d'argent mobile et l'entité financière est un fournisseur de services sur la base d'argent mobile.
